# EUROPÄISCHE PATENTSCHRIFT

(11) **EP 2 737 220 B1**
(45) Veröffentlichungstag und Bekanntmachung des Hinweises auf die Patenterteilung: **04.11.2015**
(21) Anmeldenummer: 12741275.7
(22) Anmeldetag: 17.07.2012
(51) Int. Cl.: F16B 19/10, F16B 5/02

(54) **VERBINDUNGSVORRICHTUNG ZUM TEMPORÄREN VERBINDEN VON ZWEI VORZUGSWEISE PLATTENARTIGEN TEILEN SOWIE NADEL FÜR EINE DERARTIGE VERBINDUNGSVORRICHTUNG**
CONNECTING DEVICE FOR TEMPORARILY CONNECTING TWO PREFERABLY PLATE-LIKE PARTS AND NEEDLE FOR SUCH A CONNECTING DEVICE
DISPOSITIF DE LIAISON POUR RELIER TEMPORAIREMENT DEUX PIÈCES DE PRÉFÉRENCE EN FORME DE PLAQUE AINSI QU'AIGUILLE POUR UN TEL DISPOSITIF DE LIAISON

(30) Priorität: 27.07.2011 DE 102011108624
(43) Veröffentlichungstag der Anmeldung: 04.06.2014
(73) Patentinhaber: Hausmann, Thomas, 34346 Hann. Münden (DE)
(72) Erfinder: Hausmann, Thomas, 34346 Hann. Münden (DE)
(74) Vertreter: Maikowski & Ninnemann
(86) Internationale Anmeldenummer: PCT/EP2012/063985
(87) Internationale Veröffentlichungsnummer: WO 2013/014027

(56) Entgegenhaltungen:
- DE-A1- 2 441 577
- US-A- 4 537 542
- US-A- 4 548 533
- US-A- 5 240 361

## Beschreibung

Die Erfindung bezieht sich auf eine Verbindungsvorrichtung zum temporären Verbinden von zwei vorzugsweise plattenartigen Teilen, insbesondere zur Verbindung von zwei zu verklebenden und/oder zu vernietenden Teilen gemäß dem Oberbegriff des Anspruchs 1. Darüber hinaus wird gemäß Anspruch 9 ein Nadelsystem für derartige Verbindungsvorrichtungen beansprucht, die eine verringerte Flächenpressung an den zu verbindenden Teilen gewährleisten kann. Das bevorzugte Einsatzgebiet der Erfindung ist die Luft- und Raumfahrt.

Eine gattungsgemäße Verbindungsvorrichtung ist beispielsweise aus der DE 24 41 577 A1 bekannt.

Eine weitere bekannte Verbindungsvorrichtung des erfindungsgemäßen Prinzips, das in der Luftfahrtsindustrie zur Anwendung kommt, ist in DE 20 2010 015 746 beschrieben. Sie weist einen in einem Gehäuse drehfest gelagerten Führungskörper auf, dessen Führungselemente in Führungsöffnungen eines Nadelträgers eingreifen. Der Nadelträger trägt zwei zueinander beabstandete Nadeln mit endseitigen widerhakenförmigen Nadelspitzen. Eine Spreizung der Nadelspitzen erfolgt, wenn die zunächst über das Ende der mit dem Führungskörper verbundene Spreizzunge hinausragenden Nadelspitzen durch ein Antriebselement axial in das Gehäuse hinein verschoben werden. Hierzu weisen der Nadelträger und das Antriebselement ineinander greifende Schraubengewinde auf.

Diese Verbindungsvorrichtung weist den Nachteil auf, dass die Spreizzunge einen nennenswerten Anteil des Lochquerschnittes einnimmt, der für die Durchführung der die Spannkraft übertragenden Nadeln zur Verfügung steht. Die Spreizzunge selbst kann eine Spannkraft übertragen. Des Weiteren ist nachteilig, dass die Länge der Spreizzunge auf die Dicke der zu verspannenden bzw. zu verbindenden Teile angepasst werden muss.

Der Erfindung liegt die Aufgabe zugrunde, eine verbesserte Verbindungsvorrichtung und ein neuartiges System von Nadeln mit hakenförmigen Widerlagern zu entwickeln, das bei einem vorgegebenen, für die Nadeln zur Verfügung stehenden Durchmesser eine vergrößerte Widerlagerfläche der Nadelspitzen zur Verfügung stellen und somit die Flächenpressung verringern kann.

Die Aufgabe wird erfindungsgemäß gelöst durch eine Vorrichtung gemäß den kennzeichnenden Merkmalen des Anspruchs 1 bzw. des Anspruchs 9 hinsichtlich des Nadelsystems.

Das Wesen der neuen Verbindungsvorrichtung besteht demnach in folgender Merkmalskombination:
Die Verbindungsvorrichtung, die auf einer an sich bekannten Kombination von Gehäuse, hakenförmigen Widerlagern mit integrierten Stützflächen an den freien Enden der zugeordneter Nadeln und einem Antriebselement zur axialen Einstellung der Nadeln sowie zur Spreizung der hakenförmigen Nadelspitzen basiert, ist im Wesentliche gekennzeichnet durch
   o wenigsten zwei Nadeln, die basisseitig mit jeweils separaten Trägern fest verbunden sind, von denen wenigstens ein Träger mit dem Antriebselement derart wirkverbunden ist, dass die Nadeln relativ zueinander in axialer Richtung verstellt werden können;
   o eine axiale Verschiebung der Nadeln in einer Ausgangsstellung bevor die Verbindungsvorrichtung mit den zu verbindenden Teilen verspannt ist, und zwar mit axial zueinander verschoben Nadelspitzen, während in der Verspannstellung die Nadelspitzen einander derart gegenüberliegen, dass sich deren Stützflächen auf dem gleichen axialen Niveau befinden;
   integrierte Erhebungen und Vertiefungen im Bereich der Nadelspitzen bezogen auf ihre einander zugewandten Flächen, wobei diese Erhebungen und Vertiefungen in der Ausgangsstellung der Nadeln raumsparend ineinander verschachtelt sind, und wobei die Erhebungen beim Übergang in die Verspannungsstellung der Nadelspitzen aufeinander aufgleiten und dadurch die Nadelspitzen auseinanderdrücken, so dass die Stützflächen der Nadelspitzen die zugeordneten Flächenabschnitte der zu verbindenden Teile randseitig der Montagebohrung übergreifen.

Gemäß einer Vorzugsvariante der Erfindung sind eine erste Nadel-Träger-Kombination bestehend aus einer ersten kürzeren Nadel, die mit einem ersten Träger fest verbunden ist, und eine zweite Nadel-Träger-Kombination bestehend aus einer zweiten längeren Nadel, die mit einem zweiten Träger fest verbunden ist, ineinander geschachtelt, wobei der erste Träger einen seitlichen Freischnitt oder eine dem Querschnitt der Nadel angepasste Durchgriffsöffnung für die zweite längere Nadel aufweist, so das die beiden Träger axial hintereinander und die vorzugsweise zwei Nadeln nebeneinander angeordnet sind.

Fluchtend verlaufende Führungsöffnungen in den beiden Trägern stellen in Kombination mit darin gleitend-verschiebbar eingesteckten Führungskörpern einer Stütz-Führungskörper-Kombination die Verdrehsicherung beiden Nadel-Träger-Kombinationen dar.

Ein weiteres Vorzugsmerkmals der Erfindung besteht darin, dass der erste Träger ein Koppelelement aufweist, das in eine Koppelöffnung des zweiten Trägers einsteckbar ist. Im Zusammenwirken mit einer im Bereich der besagten Koppelöffnung angeordneten Anschlagsfläche und einem Vorsprung des Koppelelements wird eine Begrenzung der axialen Verschiebbarkeit der Nadeln sichergestellt. In dieser Anschlagsposition fluchten die Stützflächen der Nadelspitzen miteinander und stehen zum Verspannen der zu verbindenden Teile bereit.

Zunächst aber, in der Ausgangsposition der noch nicht verspannten Nadeln, sind der erste und der zweite Träger aneinanderliegend ohne Abstand bzw. mit einem geringeren Abstand angeordnet, wobei die Stützflächen der Nadelspitzen noch nicht miteinander fluchten und somit auch noch nicht radial gespreizt sind.

Zur axialen Einstellung der Träger und der damit verbundenen Verschiebung der Nadeln besitzen die Träger ein Schraubgewinde, das mit einem zugeordneten innen liegenden Schraubgewinde des Antriebselements in Wirkverbindung steht. Das Schraubgewinde des Antriebselements ist vorzugsweise als sektorweise angeordnetes Innengewinde ausgebildet, um eine einfache Entformung eines aus Kunststoff gespritzten Antriebselements zu erreichen.

Vor dem Schraubengewinde ist am offenen Ende des hülsenförmigen Antriebselements eine zylindrische Fläche ohne Gewinde vorgelagert, deren Höhe wenigstens der Höhe des ersten Trägers entspricht. Dadurch wird sichergestellt, dass zunächst der zweite Träger mit der längeren Nadel mit seiner Spitze auf das axiale Niveau der Nadelspitze der kürzeren Nadel verschoben wird. Dann erst werden beide Nadelspitzen synchron verstellt bis die Verbindungsvorrichtung mit den zur verspannenden Teilen verspannt ist. Angetrieben wird das Antriebselements über eine Werkzeugschnittstelle am Boden des Antriebselements, an dem ein drehenden Werkzeugs angesetzt werden kann.

Eine alternative Ausführung sieht einen ersten Träger mit einem Außengewinde vor, das mit dem Innengewinde des Antriebs in Eingriff gebracht werden kann, und einen zweiten Träger, der mittels eines Federelements in Richtung des vorgelagerten ersten Trägers vorgespannt ist. Dese Variante hat den Vorteil, dass keine Maßnahmen vorgesehenen werden müssen, um einen zwischen den Nadelträgern abgestimmten Eingriff ihrer Gewinde in das Gewinde des Antriebsteils zu gewährleisten.

Die Nadeln weisen vorzugsweise im Bereich der Nadelspitzen Vorsprünge und Vertiefungen auf, die wechselseitig ineinander greifen, wenn die Nadelspitzen axial zueinander verschoben sind. Dadurch nehmen die Nadelspitzen einen vergleichsweise kleinen Querschnitt ein und füllen in der Ebene der Stützflächen der Nadelspitzen die Montagebohrungen nahezu vollständig aus. Wenn sich die Nadelspitzen axial auf gleichem Niveau befinden, also die Vorsprünge und Vertiefungen nicht mehr, zumindest aber nicht mehr vollständig ineinander greifen, werden die Nadelspitzen durch die aufeinander liegenden Vorsprünge auseinander gedrückt. Infolge dessen übergreifen die Stützflächen der hakenförmigen Widerlager der Nadelspitzen die zugeordneten Flächen der zu verbindenden Teile.

Eine weitere Erfindung betrifft eine neuartige Nadel für ein Nadelsystem für die voran beschriebene Verbindungsvorrichtung. Wenigstens zwei Nadeln, deren Spitzen als hakenförmige Widerlager ausgebildet sind, weisen an den einander zugewandten Flächen eine von der axialen Verschiebeebene abweichenden Kontur auf, insbesondere in Form von Vorsprüngen und Vertiefungen. Diese greifen verschachtelt wechselseitig ineinander, wenn die Nadelspitzen axial zueinander verschoben sind. Sie greifen jedoch nicht oder nur teilweise ineinander, wenn sich die Nadelspitzen axial auf gleichem Niveau befinden. Die Nadelspitzen werden dann durch die aufeinander liegenden Vorsprünge auseinander gedrückt, wodurch die Stützflächen der Nadelspitzen die zugeordneten Flächen eines der zu verbindenden Teile übergreifen.

Vorzugsweise sind die Vorsprünge und Vertiefungen oder dergleichen einstückig in die aus Kunststoff oder Metall gefertigten Nadeln integriert, insbesondere in den Bereich der Nadelspitzen. Kunststoff-Nadeln sollten faserverstärkt ausgebildet sein, um hohe mechanische Belastungen aufnehmen zu können. Kunststoff-Nadeln können in einfacher Weise integraler Bestandteil des zugeordneten Trägers sein.

Wenn die Nadeln aus einem metallischen Werkstoff gefertigt sind, z. B. in Form eines Gussteils oder eines Kaltfließpressteils, sollten basisseitig Formschlussbereiche zur stabilen Einbettung der Nadeln in einen Träger aus Kunststoff angeformt sein. Natürlich können die Nadeln und der Träger auch als einstückige metallische Gussteile gefertigt sein.

Zur Minimierung der Flächenpressung sollte die Summe der Querschnitte aller Nadelspitzen in der Ebene ihrer Stützflächen annähern dem Querschnitt der Montagebohrungen in den zu verbindenden Teilen entsprechen. Es ist zu empfehlen, dass deren Querschnitte in Summe vorzugsweise mehr als 90 % des Querschnitts der Montagebohrung einnimmt.

In einer besonderen Ausführungsform der Nadeln im Bereich ihrer Spitzen kann die Summe der Querschnitte aller Nadelspitzen in der Ebene ihrer Stützflächen größer sein als der Querschnitt der Montagebohrungen in den zu verbindenden Teilen. Dies wird durch Vorsprünge im Bereich der Nadelspitzen erreicht, die durch einen entgegen der Rastrichtung der Stützflächen verlaufenden geschwungenen Verlauf der Kontur der Nadeln von den Nadelspitzen selbst gebildet werden. Dabei greifen die Vorsprünge der kürzeren Nadeln in zugeordnete Freiräume der längeren Nadeln, während der Vorsprung der längsten Nadel die Nadelspitzen der anderen Nadeln übergreift.

Die einander zugewandten Flächen der Nadeln bzw. der Nadelspitzen weisen vorzugsweise im wesentlichen axial gerichtete, formschlüssig ineinander greifende Führungskonturen auf, um eine definierte Positionierung der Nadelspitzen während des Verstellvorgangs zu gewährleisten. Hiefür sind die Nadelspitzen biegeelastisch mit den Nadelschäften verbunden.

Nachfolgend wird die Erfindung anhand von Ausführungsbeispielen und den dargestellten Figuren näher erläutert. Es zeigen:
- Figuren 1a, 1b: perspektivische Ansichten der Verbindungsvorrichtung
- Figuren 2a, 2b: Explosionsdarstellung der Einzelteile der Verbindungsvorrichtung
- Figuren 3a, 3b: perspektivische Ansichten der ersten Nadel-Träger-Kombination mit einer Durchgriffsöffnung für die zweite Nadel
- Figuren 4a, 4b: perspektivische Ansichten der zweiten Nadel-Träger-Kombination mit einer Koppelöffnung für den Durchgriff eines Koppelelements des ersten Trägers
- Figuren 5a, 5b: perspektivische Ansichten der beiden ineinander verschachtelten Nadel-Träger-Kombinationen mit gespreizten Nadelspitzen
- Figuren 6a, 6b: perspektivische Darstellung einer trägerseitigen Ansicht der zweiten Nadel-Träger-Kombination sowie vergrößerte Darstellung der Koppelöffnung
- Figuren 7a, 7c: perspektivische Ansichten der beiden ineinander verschachtelten Nadel-Träger-Kombinationen mit nicht gespreizten Nadelspitzen
- Figur 7b: vergrößerte Darstellung der zueinander verschobenen und anlageseitig ineinander verschachtelten Nadelspitzen
- Figuren 8a - 8c: perspektivische Ansichten der beiden ineinander verschachtelten Nadel-Träger-Kombinationen in Verbindung mit der Stütz-Führungskörper-Kombination, wobei zeigen:

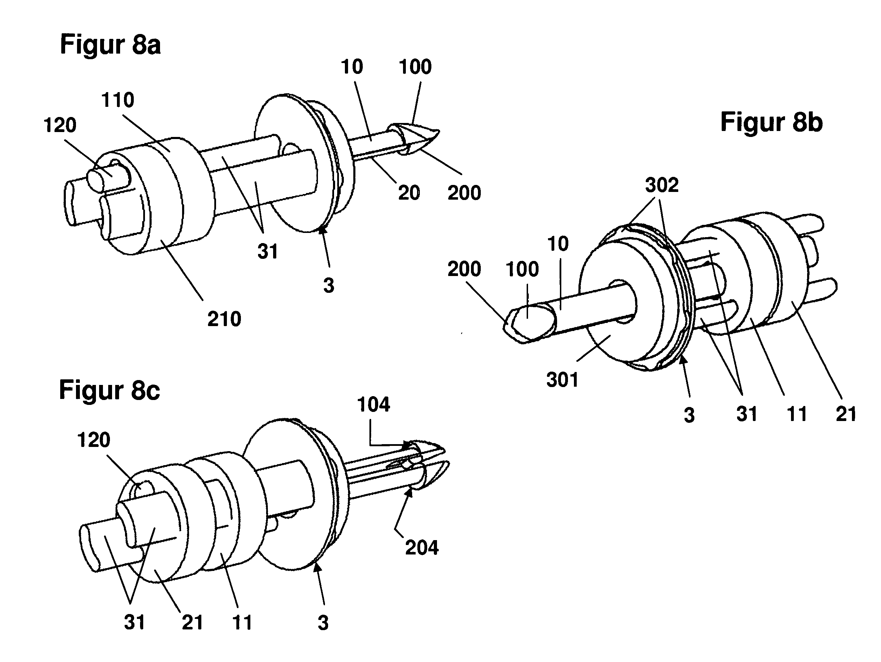

- Figur 8a: maximal zueinander verschobene, nicht gespreizte Nadelnspitzen
- Figur 8b: teilweise zueinander verschobene Nadeln mit beginnender Spreizung der Nadelspitzen
- Figur 8c: Nadelspitzen auf gleicher Höhe (nicht mehr zueinander verschoben) und gespreizt

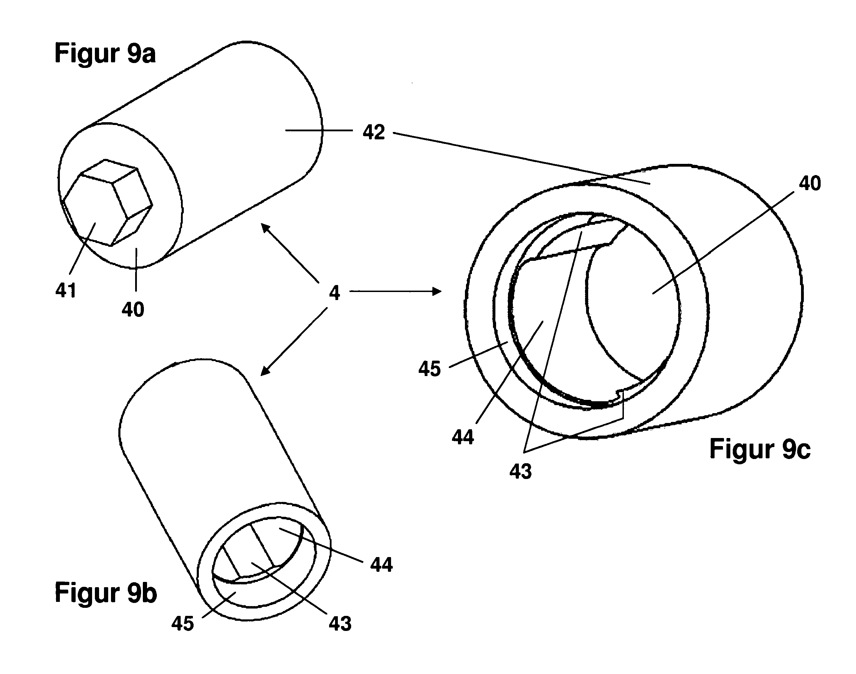

- Figuren 9a - 9c: verschiedene perspektivische Ansichten des auf die Nadel-Träger-Kombinationen einwirkenden Antriebselements

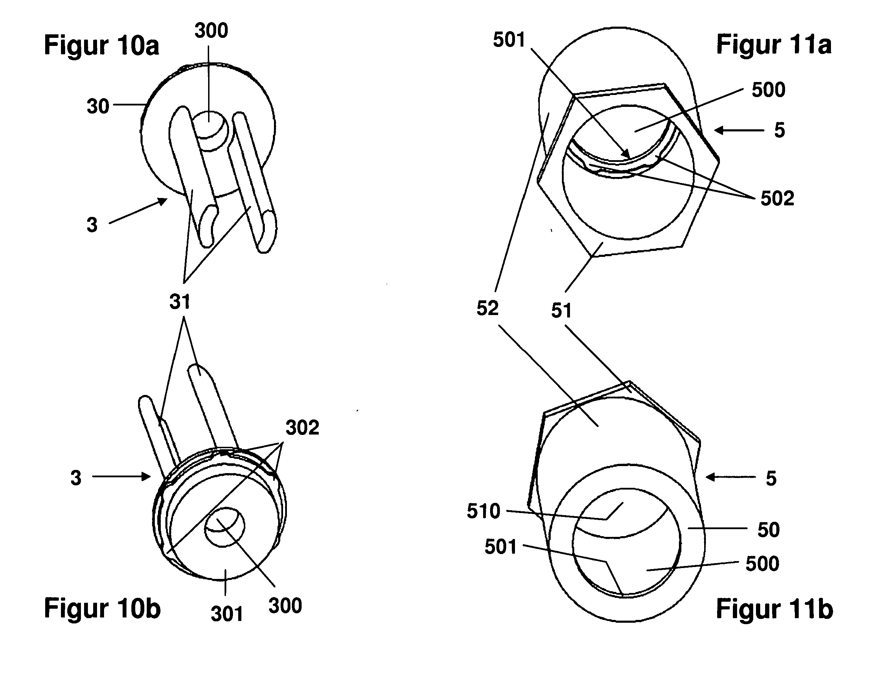

- Figuren 10a, 10b: perspektivische Ansichten der Stütz-Führungskörper-Kombination mit Formschlusselementen zum äußeren Gehäuse
- Figuren 11a, 11b: perspektivische Ansichten des äußeren Gehäuses

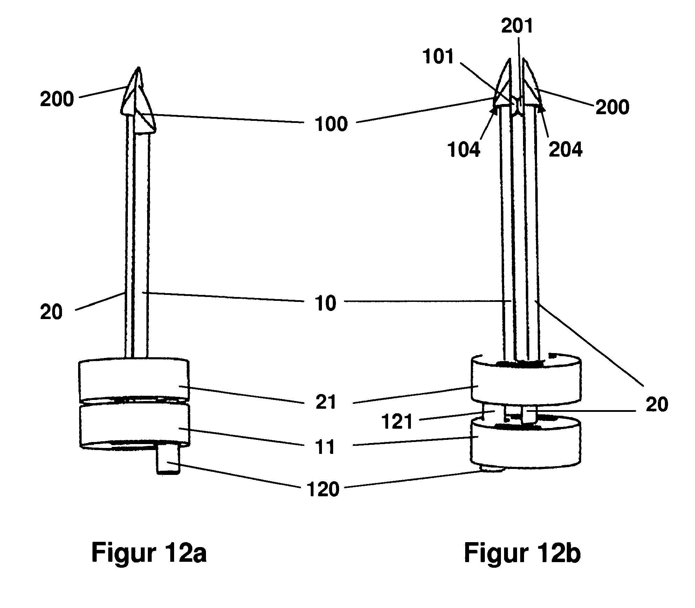

- Figuren 12a, 12b: Seitenansichten der beiden ineinander verschachtelten Nadel-Träger-Kombinationen mit nicht gespreizten und gespreizten Nadelspitzen

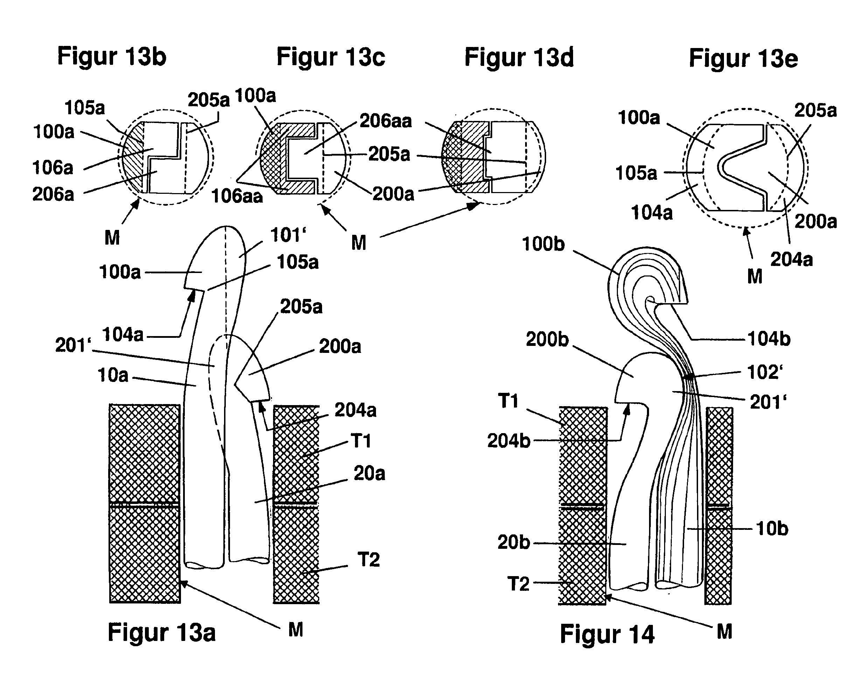

- Figuren 13a - 13e: Prinzipdarstellung verschiedener Varianten von rückseitig über Formschlussbereiche ineinander verschachtelten Nadeln, deren Spitzen im Bereich ihrer Stützflächen in Summe einen Querschnitt aufweisen, der größer als der Querschnitt der Montagebohrung ist
- Figuren 14: Prinzipdarstellung einer Variante von rückseitig über einen in seiner Dicke reduzierten Bereich verschachtelten Nadeln

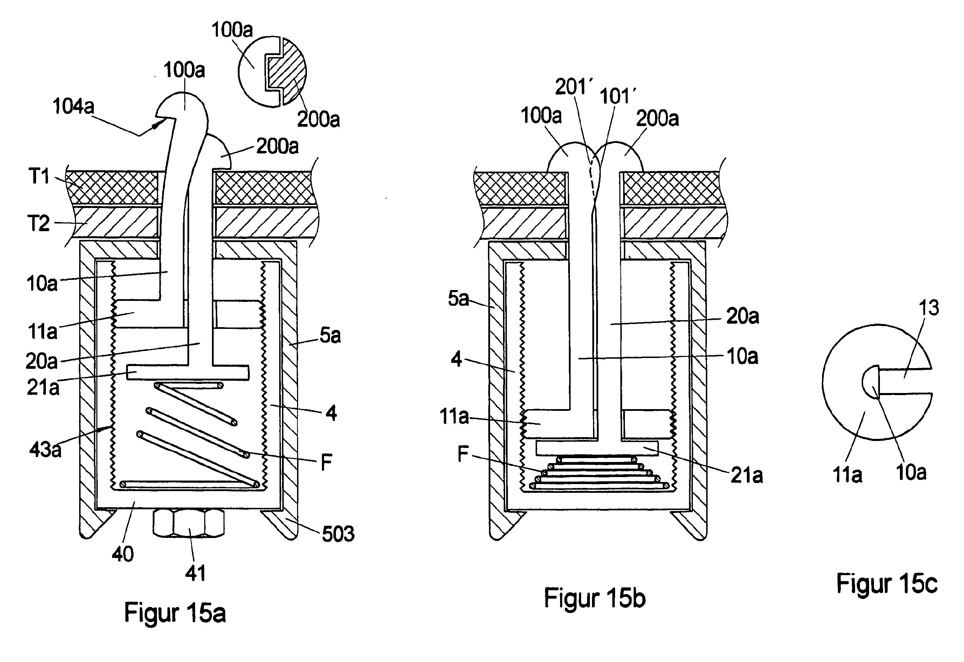

- Figuren 15a -15b: Querschnitt einer Verbindungsvorrichtung mit nur einem angetriebenen Nadelträger und Nadeln gemäß dem in den Figuren 13a - 13c dargestellten Prinzip
- Figur 15c: Draufsicht auf die Kontur des angetriebenen Nadelträgers mit seitlichem Freischnitt zur Einführung der anderen Nadel

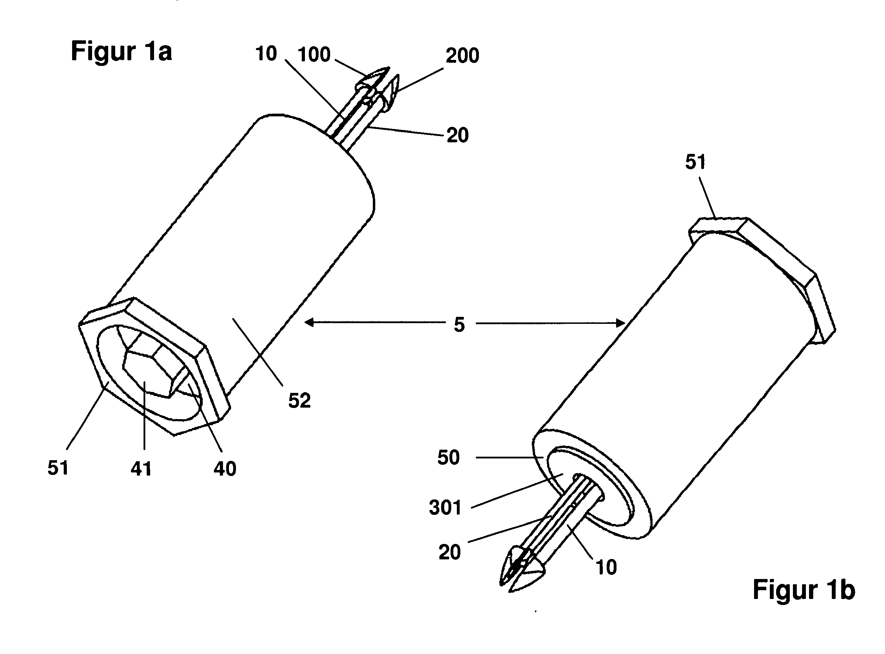

Die in den Figuren 1 a und 1 b gezeigten perspektivischen Ansichten der Verbindungsvorrichtung stellen zwei so genannte Heftnadeln 10, 20 in einer Position dar, in der eine Verspannung mit den (hier nicht dargestellten Teilen) erfolgen könnte. Dabei befinden sich die Nadelspitzen 100, 200 auf gleichem axialem Niveau, bezogen auf die Stützfläche 301, die den Kontakt zu einem der zu verbindenden Teile herstellt. Sollte die Stützfläche 301 durch Kleber verschmutzt werden, so kann durch Austausch des Teils 3 in einfacher Weise der Vorteil des modularen Systems genutzt und Kosten gespart werden.

Das Gehäuse 5 der Verbindungsvorrichtung weist auf der gegenüberliegenden Seite einen Formschlussbereich 51 auf, der in Verbindung mit einem drehenden Werkzeug als Verdrehsicherung dient, wenn die Verstellkraft über ein zweites Formschlusselement 41 übertragen wird. Dieses zweite Formschlusselement 41 ist am Boden 40 des Antriebselements 4 angeformt, das zur Verstellung der Nadeln 10, 20 und Verspannung der Nadelspitzen 100, 200 mit den zu verbindenden insbesondere plattenförmigen Teilen vorgesehen ist.

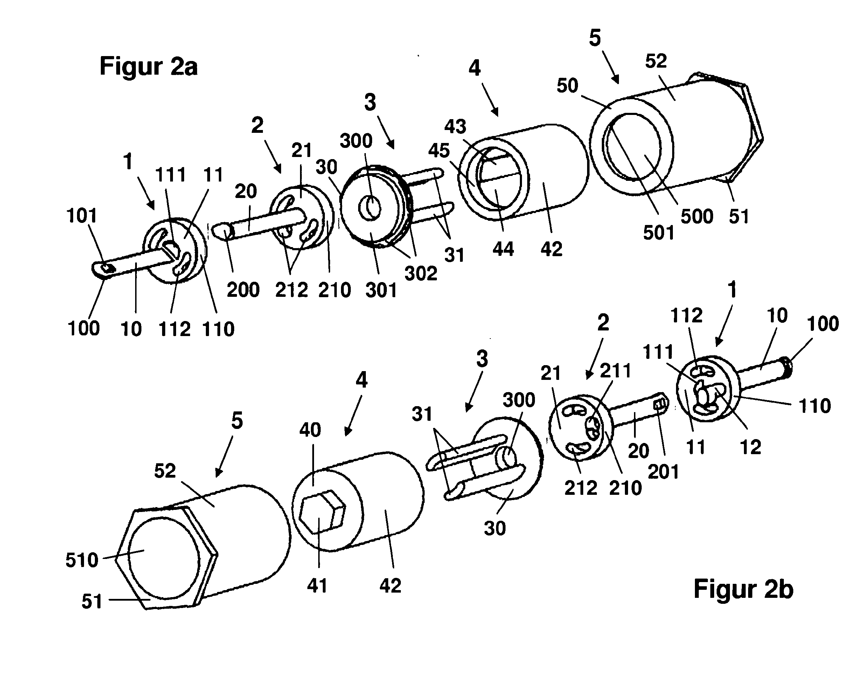

Den Figuren 2a und 2b kann man sämtliche Teile der Verbindungsvorrichtung entnehmen. Demnach ist eine erste Nadel-Träger-Kombination 1 vorgesehen, die aus einer Nadel 10 und einem Träger 11 besteht, wobei beide fest miteinander verbunden sind. Die Nadel 10 besitzt einen kreisabschnittsförmigen Querschnitt, der - soweit wie möglich - einem Halbkreis angenähert werden sollte, um den zur Verfügung stehenden Raum bestens zu nutzen und somit seine Tragfähigkeit zu maximieren. Auf der im Wesentlichen flachen Seite der Nadel 10 ist im Träger 11 eine Durchgriffsöffnung ausgebildet, durch die hindurch die Nadel 20 der zweiten Nadel-Träger-Kombination 2 geführt werden kann.

Beide Träger 11, 21 besitzen an ihren zylindrischen Außenflächen Schraubgewinde 110, 210 zum Zwecke des Eingriffs in zugeordnete Gewindesegmente 43 des Antriebselements 4. Darüber hinaus bilden fluchtende Führungsöffnungen 112, 212 der beiden Träger 11, 21 in Verbindung mit den eingesteckten Führungskörpern 31 der Stütz-Führungskörper-Kombination 3 eine Verdrehsicherung für die Nadeln 10, 20. Dabei durchgreifen die Nadeln 10, 20 die Öffnung 300 des Stützkörpers 30. Der Stützkörper 30 besitzt seinerseits Formschlusselemente 302, die in Verbindung mit zugeordneten Formschlusselements 502 des Gehäuses 5 (siehe Figur 11a) eine weitere Verdrehsicherung bilden.

Der Zusammenbau der Teile 1 - 5 ist in folgende Reihenfolge vorzunehmen:
Zunächst werden die erste und die zweite Nadel-Träger-Kombination 1, 2 miteinander verschachtelt, indem die zweite Nadel 20 in die Durchgriffsöffnung 111 eingeführt wird, und zwar bis die beiden Träger 11, 21 aufeinander aufliegen. In diesem Zustand überragt das Ende der zweiten Nadelspitze 200 das Ende der ersten Nadelspitze 10 etwas, wobei die in den flachen Seiten der Nadeln 10, 20 eingearbeiteten Vorsprüngen 101, 201 und Vertiefungen 102, 202 raumsparend ineinander greifen. Dabei liegen die Nadelspitzen 100, 200 im Wesentlichen direkt mit ihren flachen Seiten aneinander und weisen die kleinste radiale Ausdehnung auf.
Die so gefügten Nadel-Träger-Kombinationen 1, 2 werden nun mit der Stütz-Führungskörper-Kombination 3 verschachtelt, indem die Nadeln 10, 20 vonseiten der Führungskörper 31 durch die Öffnung 300 des Stützkörpers 30 gesteckt werden bis der Träger 11 am Stützkörper 30 anliegt. Dabei greifen die Führungskörper 31 durch die Führungsöffnungen 112, 212 und bilden eine Verdrehsicherung, um die Antriebskraft zur Verstellung der Nadeln 10, 20 mittels des drehbaren Antriebselements 4 sicherstellen zu können.

Im nächsten Schritt wird die Kombination der Teile 1, 2 und 3 in das Antriebselement 4 eingesetzt, wobei der Träger 21 zunächst am ersten Gewindegang der Innengewindesegmente 43 anstößt und den zylindrischen Raum 45 (der kein Gewinde aufweist) weitgehend ausfüllt. Durch eine Schraubbewegung wird nun das Außengewinde 210 des Trägers mit dem Innengewinde 43 des Antriebs in Eingriff gebracht, und zwar bis der erste Träger 11 vom Raum der zylindrischen Fläche 45 vollständig aufgenommen ist. In diesem Zustand liegt der Stützkörper 30 auf dem äußeren Rand des Antriebselements auf.

Abschließend wird die Kombination aus den Teilen 1, 2, 3 und 4 vonseiten des Formschlussbereichs 51 in die Öffnung 510 des Gehäuses 5 eingesteckt, bis die Stützfläche 301 die stirnseitige Öffnung 500 durchragt, wobei der Stützkörper 30 der Stütz-Führungskörper-Kombination 3 mit seinen Formschlusselementen 302 in zugeordneten Formschlusselemente 502 (siehe Figur 11a) eingreift und eine Verdrehsicherung bildet. Eine in den Figuren 2a, 2b nicht dargestellte Sicherung solle gewährleisten, dass die axiale Lage des Antriebselements 4 im Gehäuse 5 erhalten bleibt.

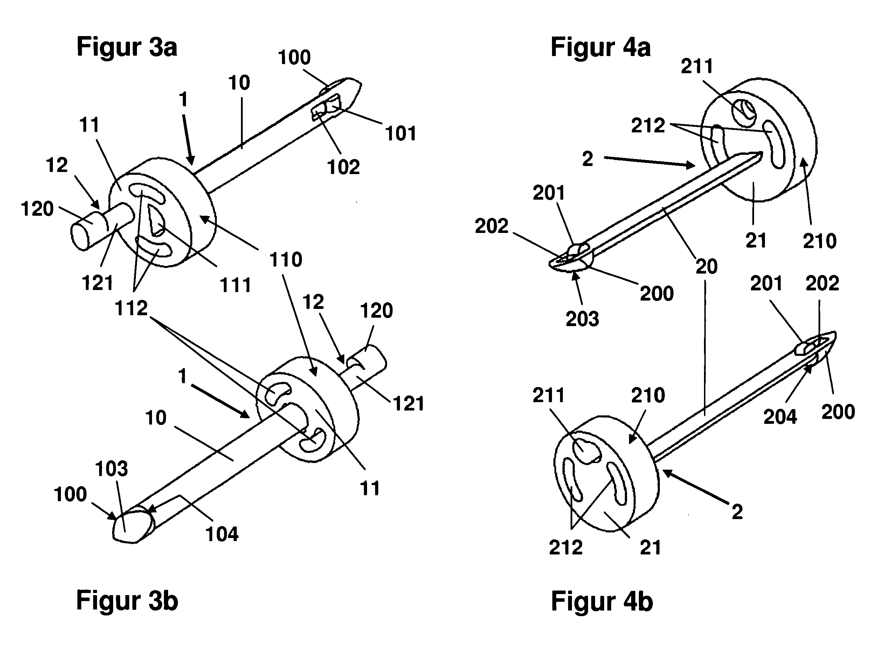

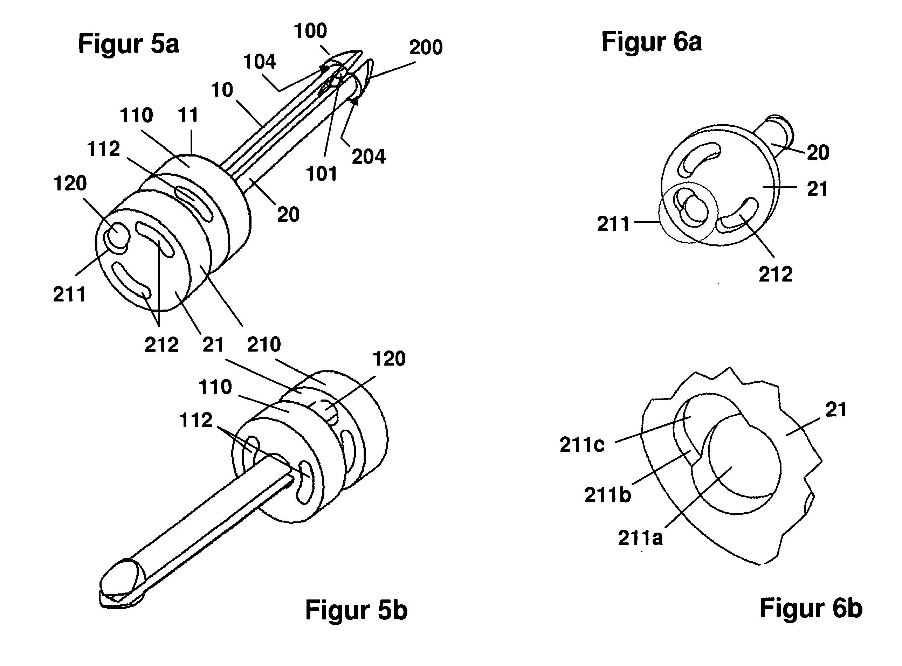

Die Figuren 3a, 3b bzw. 4a, 4b zeigen eine mögliche Ausführungsform von Nadel-Träger-Kombinationen 1 und 2, deren Zusammenbau in verschiedenen axialen Lagen ihrer Elemente in den Figuren 5a bis 7c dargestellt ist.

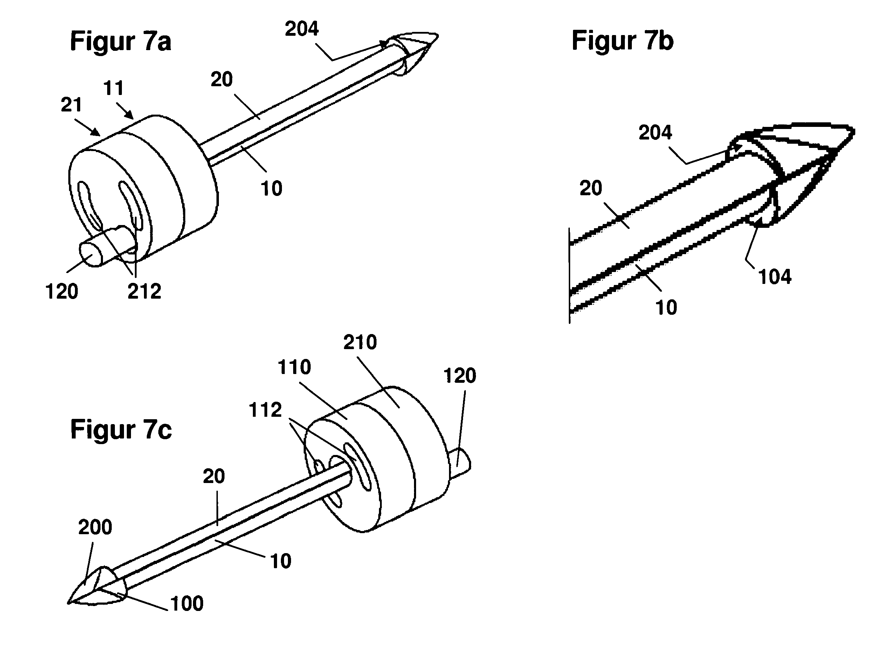

Demgemäß weisen die Nadelspitzen 100, 200 der Nadeln 10, 20 an ihren nach außen gerichteten Seiten konisch oder kegelabschnittsförmig ausgebildete Flächen 103, 203 auf, die in radial verlaufende Stützflächen 104, 204 münden. Auf den nach innen gerichteten Seiten der Nadeln 10, 20 (die im Wesentlichen flach ausgebildet sind) sind im Bereich der Nadelspitzen 100, 200 oder in deren nahem Umfeld Vorsprünge 101, 201 und Vertiefungen 102, 202 eingearbeitet, die in einer Ausgangsstellung der Nadeln 10, 20 wechselseitig ineinander greifen, so dass die Nadelspitzen 100, 200 mit ihren nach innen gerichteten Seiten aneinander liegen. Siehe hierzu auch Figuren 7a bis 7c. In dieser Lage nehmen die Nadelspitzen 100, 200 den geringsten radialen Querschnitt ein, der etwas geringer ist, als der Querschnitt der Montagebohrungen M der zu verbindenden Teile. Dabei liegen die Träger 11, 21 aufeinander und die zweite Nadelspitze 200 überragt die ersten Nadelspitze 100 einwenig.

Des Weiteren sind Mittel vorgesehen, die eine Relativverschiebung der Nadeln 10, 20 bzw. ihrer Nadelspitzen 100, 200 derart begrenzen, dass deren Stützflächen 104, 204 genau auf das selbe axiale Niveau verlagert werden, wobei die Vorsprünge 101, 201 aufeinander aufgleiten und dadurch die Nadelspitzen 100, 200 spreizen. Erst dann kann eine Verspannung mit den zu verbindenden Teilen erfolgen.

Zur Steuerung der Relativbewegung der Nadeln 10, 20 ist am Träger 11 ein Koppelelement 12 mit einem einen Vorsprung bildenden Koppelbereich 120 vorgesehen, der in eine Koppelöffnung 211 eingreifen kann. Die Koppelöffnung 211 weist gemäß der Detaildarstellungen der Figuren 6a, 6b ein für den Durchgriff des Koppelelements 12 ausreichend weites Rundloch 211 a auf, an das sich in Umfangsrichtung ein Sachloch 211 b mit einer Anschlagsfläche 211c anschließt. In der schon beschriebenen Ausgangsposition der zueinander versetzten Nadeln 10, 20 gemäß Figuren 7a - 7c ragt das Koppelelement 12, 120 am weitesten durch die Koppelöffnung 211 hindurch. Wenn der hintergreifende Koppelbereich 120 des Koppelelements 12 aufgrund einer axialen Antriebsbewegung des zweiten Trägers 21 mit der Anschlagsfläche 211c in Eingriff kommt, wird der erste Träger 11 mitgenommen und sein Außengewinde 100 vom Innengewinde 42 des Antriebselements 4 erfasst. Diese Anschlagsposition, in der die Nadelspitzen 100, 200 gespreizt sind, zeigen die Figuren 5a, 5b.

An dieser Stelle sei angemerkt, dass - entgegen der vereinfachten Darstellung in den Figuren - die Nadeln 10, 20 bei Spreizung ihrer Nadelspitzen 100, 200 in Richtung ihrer Anbindung an den Trägern 11, 21 zunehmend weniger gespreizt werden. In diesem Sinne sind auch die Seitenansichten der Figuren 12a, 12b als schematische Darstellungen zu sehen, welche die Nadeln 10, 20 und die Träger 11, 21 in ihrer Ausgangsposition sowie in ihrer Funktionsposition (also mit gespreizten Nadelspitzen 100, 200) zeigen.

Figur 8a zeigt die Ausgangsposition mit zueinander verschobenen Nadelspitzen 100, 200, die raumsparend ineinander verschachtelt sind, wobei die Träger 11,21 aufeinander liegen und die am Stützkörper 31 angeformten Führungskörper 31 über eine gewisse Länge in die Führungsöffnungen 112, 212 eingesteckt sind. Gemäß Figur 8b hat eine geringfügige Relativbewegung zwischen den Nadeln 10, 20 bzw. den Nadelspitzen 100, 200 stattgefunden, was man an dem kleinen Spalt zwischen den Trägern 11,21 erkennen kann. Die maximale Verschiebung zwischen den Nadeln 10, 20 zeigt Figur 8c. Hier befinden sich die axial gerichteten Anschlagsflächen 104, 204 auf gleichem Niveau. Gleichzeitig spreizen die aufeinander aufstehenden Vorsprünge die Nadelspitzen 100, 200 maximal auseinander. Die Träger 11,21 weisen nun den maximalen Abstand auf, der durch die bereits beschriebenen Koppelöffnung 211 und das Koppelelement 12, 120 begrenzt wird.

Um ein unerwünscht frühes Eingreifen des Gewindes 43 des Antriebselements 4 in das Gewinde 110 des ersten Trägers 11 zu verhindern, empfiehlt es sich, den Eingriff zwischen den Führungskörpern 31 und den Führungsöffnungen 112 mit ausreichend Reibung auszustatten. Alternativ kann hierzu aber auch zwischen den Trägern 12, 21 eine Druckfeder installiert werden, die gegebenenfalls einstückiger Bestandteil eines durch Kunststoffspritzen hergestellten Trägers 11, 21 sein kann.

Die Figuren 9a - 9c zeigen das hülsenförmige Antriebselement 4, das im Zusammenhang mit den Figuren 2a, 2b bereits dem Prinzip nach beschrieben wurde, vergrößert in verschiedenen Ansichten. Es ist vorteilhaft, dieses Element aus Kunststoff zu fertigen, wobei das Innengewinde 43 nicht durchgehend sondern alternierend zu gewindelosen Freischnitten 44 segmentartig angeformt ist, um in einfacher Weise eine Entformung eines Schiebers eines Spritzgusswerkzeugs gewährleisten zu können. Anderenfalls müsste dieser Teil des Spritzgusswerkzeugs aufwendig herausgeschraubt werden. Der gewindelose zylindrische vordere Bereich 45 des Antriebselements 4 dient der Aufnahme des ersten Trägers 11 in der Ausgangsposition der Teile der Verbindungsvorrichtung. Für den Eingriff eines drehenden Werkzeugs steht am hinteren Boden 40 ein Sechskant-Formschlusselement 41 zur Verfügung.

Die Gegenüberstellung der Stütz-Führungskörper-Kombination 3 von Figur 10a, 10b und des Gehäuses von Figur 11a, 11b soll den formschlüssigen Eingriff des Stützkörpers 3 mit seinen Formschlusselementen 302 in die zugeordneten Formschlussbereiche 502 in der Nähe des Randes 501 der Öffnung 500 im Gehäuse 5 verdeutlichen. Die Stützfläche 301 des Stützkörpers 30 durchragt die Öffnung 500 und übergreift die stirnseitige Fläche 50 des Gehäuses 5.

Eine andere Variante erfindungsgemäßer Nadeln 10a, 20a ist in den Figuren 13a - 13c dargestellt. Die Nadeln 10a, 20a sind in die konzentrischen Montagebohrungen M der zu verbindenden Teile T1, T2 gesteckt, wobei die Nadelspitzen 100a, 200a mit ihren Stützflächen 104a, 204a den oberen Rand des Teils 1 überragen. Die nach innen gerichteten, einander zugewandten Seiten der Nadeln 10a, 20a sind nach dem Nut-Feder-Prinzip ineinander verschachtelt, wie in den Figuren 13b oder 13c und 13d beispielhaft gezeigt. In der dargestellten Ausgangsposition von Figur 13a ist die Nadelspitze 200a der kürzeren Nadel 20a rückseitig teilweise "innerhalb" der längeren Nadel 10a eingefügt. Der durch die gestrichelte Linie gekennzeichnete Bereich soll den Vorsprung 201' kenntlich machen, der in eine passfähige Kontur der anderen Nadel 10a eingreift. Bei einer Relativverschiebung der beiden Nadeln 10a, 20a, welche die Stützflächen 104a, 204a auf ein gleiches axiales Niveau bringt, laufen die Konturen der Vorsprünge 101', 201' aufeinander auf und schwenken die Stützflächen 104a, 204a über die Randfläche der Montagebohrung M des Teils T1.

Die Besonderheit dieses Ausführungsbeispiels besteht darin, dass die Summe der Querschnitte der Nadelspitzen 100a, 200a in der Ebene ihrer Stützflächen 104a, 204a größer ist, als der Querschnitt der Montagebohrung M. Bei dem gemäß Figur 13c gezeigten Ausführungsbeispiel bilden die formschlüssig ineinander greifenden Führungskonturen 106aa und 206aa ein Nut-Feder-System, und zwar entsprechend der in Figur 13a gezeigten Ausgangslage der Nadelspitzen 100a, 200a. Bei einer Verschiebung der Nadeln 10a, 20a verändern sich die Eingriffstiefen von den die Nut bildenden Führungskonturen 106aa und die Feder bildenden Führungskonturen 206aa wie in Figur 13d dargstellt. Infolge dessen werden die Nadelspitzen 100a, 200a auseinander gedrückt, so dass die Stützflächen 104a, 204a die Ränder der Montagebohrung M übergreifen. Sobald die Stützflächen 104a, 204a das gleiche axiale Niveau erreicht haben, kann die vorgesehene Verspannkraft durch Drehen des Antriebselements 4 auf die zu verbindenden Teile T1, T2 übertragen werden.

Figur 13e zeigt einer weitere Variante von Führungskonturen des Nut-Feder-Prinzips. Die keilförmig ineinander greifenden Konturen stellen die Ausgangsposition der Nadeln in Analogie zu den Figuren 13a und 13c dar, also mit zueinander verschobenen Nadelspitzen 100a, 200a. Diese keilförmige Kontur hat den Vorteil, dass sie weniger toleranzanfällig ist und stets zentrisch führt. Die Eckkanten 105a, 205a der Stützflächen 104a, 204a sind in dieser Ausführungsform kreisabschnittförmig geschwungen ausgebildet und damit der Kontur der Montagebohrung M angenähert. Hierdurch wird die Größe der Stützflächen 104a, 204a maximiert und die Flächenpressung minimiert.

Die in Figur 13b dargestellte Variante eines L-förmigen Querschnitts rückseitiger Konturen der Nadeln 10a, 20a im Bereich ihrer Spitzen hat den Vorteil, dass man mit nur einer Variante von Nadeln auskommt.

Eine im gewissen Sinne extrem weiterentwickelte Variante des voran beschriebenen Ausführungsprinzips zeigt Figur 14. Hier ist die so genannte Vertiefung 102' in der längeren Nadel 10b durch eine Materialreduzierung bereitgestellt, in der ein erheblicher Anteil des Kopfes (analog Vorsprung 201') der Nadelspitze 200b Platz findet. Für diese Ausführung muss eine hinreichende Schwenkbarkeit der Nadelspitzen 100b, 200b gewährleistet sein. Bei Verwendung von Kunststoff als Material für die Nadeln 100b, 200b sollte die mechanische Belastbarkeit durch die Einlagerung von Langfasern (vorzugsweise aus Aramid oder verwandten Materialien) verbessert werden.

Abschließend soll noch auf einer Variante einer Verbindungsvorrichtung (siehe Figuren 15a -15c) hingewiesen werden, bei der nur der Träger 11 a der an weitesten herausragenden Nadel 10a über ein Außengewinde, das mit dem Innengewinde 43a des Antriebselements im Eingriff steht, direkt angetrieben wird. Der Träger 21 a der anderen Nadel 20a wird zwar durch eine Feder F nach oben gedrückt, jedoch befinden sich die Nadelspitzen 100a, 200a derart in radialer Richtung elastisch vorgespannt miteinander im Eingriff, dass diese Nadelspitzen 100a, 200a erst dann mit ihren Stützflächen 104a, 204a auf das gleich axiale Niveau gelangen können, wenn sich die Nadelspitze 200a bereits mit dem einen zu verspannenden teil T1 im Eingriff befindet und der Träger 11 a weiter verstellt wird, bis er schließlich mit dem zweiten Träger 21 a in Anlage kommt. Bei weiterer Betätigung des Antriebselements 4 wird die vorgesehene Verspannkraft aufgebaut. Siehe auch Prinzipdarstellung von Figur 15b, bei der die Verspannung der zu verbindenden Teile T1, T2 erst nach längerem Verstellweg bei weitgehend komprimierter Feder F erfolgt.

Figur 15c zeigt schematisch die Draufsicht auf den Träger 11 a, der einen radial gerichteten Freischnitt 13 aufweist, durch den hindurch die andere Nadel 20a seitlich eingesetzt werden kann, um die beiden Nadel-Träger-Kombinationen zueinander zu fügen.

### Bezugszeichenliste

- 1: Nadel-Träger-Kombination
- 10, 10a, 10b: Nadel
- 11, 11a: Träger mit Außengewinde
- 12: Koppelelement
- 13: Freischnitt
- 100, 100a, 100b: Nadelspitze / hakenförmiges Widerlager
- 101, 101': Vorsprung
- 102, 102': Vertiefung
- 103: konisch verlaufende Fläche
- 104, 104a, 104b: Haltefläche/Stützfläche
- 105a: Eckkante der Stützfläche
- 106a, 106aa: Führungskontur / Formschlusselement
- 110: Gewinde
- 111: Durchgriffsöffnung
- 112: Führungsöffnung
- 120: Koppelbereich (hintergreifend)
- 121: Verbindungsbereich

- 2: Nadel-Träger-Kombination
- 20, 20a, 20b: Nadel
- 21, 21a: Träger mit Außengewinde
- 200, 200a, 200b: Nadelspitze / hakenförmiges Widerlager
- 201, 201': Vorsprung
- 202: Vertiefung
- 203: konisch verlaufende Fläche
- 204, 204a, 204b: Haltefläche/Stützfläche
- 205a: Eckkante der Stützfläche
- 206a, 206aa: Führungskontur / Formschlusselement
- 210: Gewinde
- 211: Kopplungsöffnung
- 211a: Rundloch
- 211b: Sackloch
- 211c: Anschlagsfläche
- 212: Führungsöffnung

- 3: Stütz-Führungskörper-Kombination
- 30: Stützkörper
- 31: Führungskörper
- 300: Öffnung
- 301: Stützfläche
- 302: Formschlusselemente

- 4: Antriebselement/Gewindehülse
- 40: Boden
- 41: Wekzeugschnitstelle/Formschlusselement/Sechskantelement
- 42: zylindrische Außenfläche der Gewindehülse
- 43, 43a: Innengewindesegment
- 44: Freischnitt (zur Entformung des Schiebers eines Spritzwerkzeugs)
- 45: zylindrische Fläche ohne Gewinde

- 5: Gehäuse
- 50: stirnseitige Fläche 50
- 51: Formschlussbereich
- 52: Außenwandung
- 500: Öffnung, stirnseitig
- 501: Rand der Öffnung 500
- 502: Formschlussbereich
- 503: Rastelement
- 510: Öffnung

- F: Feder
- M: Montagebohrung
- T1: Teil 1
- T2: Teil 2

## Patentansprüche

1. Verbindungsvorrichtung zum Verbinden von zwei vorzugsweise plattenartigen Teilen (T1, T2), insbesondere zur lösbaren Verbindung von zwei zu verklebenden Teilen,
- mit einer mit dem Gehäuse (5) der Verbindungsvorrichtung direkt oder indirekt verbundenen Stützfläche (301) zur Abstützung an einem der zu verbindenden Teile einerseits,
- mit Stützflächen (104, 204) an wenigstens zwei hakenförmigen Widerlagern zur Abstützung an dem anderen der zu verbindenden Teile, wobei die Stützflächen (104, 204) der hakenförmigen Widerlager das freie Ende zugeordneter Nadeln (10, 20) bilden,
- mit einem System zur axialen Einstellung der Stützflächen (104, 204) der verstellbaren hakenförmigen Widerlager und zu deren Verlagerung orthogonal zur axialen Einstellrichtung, um mit den Stützflächen (104, 204) der hakenförmigen Widerlager an dem anderen der zu verbindenden Teile anzugreifen, nach dem die hakenförmigen Widerlager (Nadelspitzen 100, 200) die sich überdeckenden Öffnungen der zu verbindenden Teile durchgriffen haben, und
- mit einem Antriebselement (4) zur axialen Einstellung der Nadeln (10, 20),
**dadurch gekennzeichnet,**
**dass** wenigstens zwei der zu einer Verbindungsvorrichtung gehörenden Nadeln (10, 20) basisseitig mit separaten Trägern (11, 21) verbunden sind, von denen wenigstens ein Träger (11, 12) mit dem Antriebselement (4) derart wirkverbunden ist, dass das Antriebselement (4) geeignet ist, die Nadeln (10, 20) relativ zueinander in axialer Richtung zu verstellen,
**dass** in einer Ausgangsstellung der Nadeln vor dem Verspannen der zu verbindenden Teile die Nadelspitzen (100, 200) axial zueinander verschoben sind und dass in einer Verspannstellung die Nadelspitzen (100, 200) einander derart gegenüberliegen, so dass sich deren Stützflächen (104, 204) auf dem gleichen axialen Niveau befinden,
**dass** die Nadeln (10, 20) im Bereich ihrer Spitzen (100, 200) bezogen aus ihre einander zugewandten Flächen integrierte Erhebungen (101, 201) und Vertiefungen (102, 202) aufweisen, wobei diese Erhebungen (101, 201) und Vertiefungen (102, 202) in der Ausgangsstellung der Nadeln (10, 20) raumsparend ineinander verschachtelt sind, und wobei sich die Erhebungen (101, 201) in der Verspannungsstellung der Nadelspitzen (100, 200) gegeneinander abstützen, so dass die Stützflächen (104, 204) orthogonal zur axialen Einstellrichtung der Nadeln (10, 20) verstellt werden.

2. Vorrichtung nach Anspruch 1, **gekennzeichnet durch**
o eine erste Nadel-Träger-Kombination (1) bestehend aus einer ersten kürzeren Nadel (10), die mit einem ersten Träger (11) fest verbunden ist, und
o eine zweite Nadel-Träger-Kombination (2) bestehend aus einer zweiten längeren Nadel (20), die mit einem zweiten Träger (21) fest verbunden ist,
o wobei der erste Träger (11) einen Freischnitt oder eine Durchgriffsöffnung (111) für die zweite längere Nadel (20) aufweist, so das die Träger (11, 21) axial hintereinander und die Nadeln (10, 20) nebeneinander anordenbar sind.

3. Vorrichtung nach Anspruch 2, **dadurch gekennzeichnet, dass** die Träger (11, 21) fluchtend verlaufende Führungsöffnungen (112, 212) aufweisen, in die Führungskörper (31) einer Stütz-Führungskörper-Kombination (3) zum Zwecke der Verdrehsicherung einsteckbar sind oder der erste Träger (11) mit einem Außengewinde (100) versehen ist, das mit dem Innengewinde (43) des Antriebs (4) in Eingriff gebracht werden kann, und dass der zweite Träger (21) mittels eines Federelements in Richtung des vorgelagerten ersten Trägers (11) vorgespannt ist.

4. Vorrichtung nach Anspruch 1 und 2, **dadurch gekennzeichnet, dass**
- der erste Träger (11) ein Koppelelement (12) aufweist, das in eine Koppelöffnung (211) des zweiten Trägers (21) einsteckbar ist und im Zusammenwirken mit einer im Bereich der Koppelöffnung (211) angeordneten Anschlagsfläche (211c) eine Begrenzung der axialen Verschiebbarkeit der Nadeln (100, 200) derart bildet, dass die Stützflächen (104, 204) der Nadelspitzen (100, 200) miteinander fluchten, oder
- der erste und der zweite Träger (11, 21) aneinanderliegend anordenbar sind, wobei die Stützflächen (104, 204) der Nadelspitzen (100, 200) nicht miteinander fluchten.

5. Vorrichtung nach wenigstens einem der voran stehenden Ansprüche, **dadurch gekennzeichnet, dass** zur axialen Verstellbarkeit der Träger (11, 21) und der damit verbundenen Nadeln (100, 200) die Träger (11, 21) ein Schraubgewinde (110, 210) aufweisen, das mit einem zugeordneten Schraubgewinde (43) des Antriebselements (4) in Wirkverbindung steht.

6. Vorrichtung nach Anspruch 5, **dadurch gekennzeichnet, dass**
- das Schraubgewinde (43) des Antriebselements (4) als sektorweise angeordnete Innengewindeabschnitte ausgebildet sind und/oder
- dem Schraubgewinde (43) am offenen Ende des hülsenförmigen Antriebselements (4) eine zylindrische Fläche (45) ohne Gewinde vorgelagert ist, die wenigsten eine solche Höhe aufweist, die der Höhe des ersten Trägers entspricht.

7. Vorrichtung nach wenigstens einem der voran stehenden Ansprüche, **dadurch gekennzeichnet, dass** an dem Boden (40) des Antriebselements (4) eine Werkzeugschnittstelle (41) zum Eingriff eines drehenden Werkzeugs vorgesehen ist.

8. Vorrichtung nach wenigstens einem der voran stehenden Ansprüche, **dadurch gekennzeichnet, dass**
- eine Verdrehsicherung zwischen dem Gehäuse (5) und der Stütz-Führungskörper-Kombination (3) vorgesehen ist, insbesondere gewährleistet durch daran angeformte Formschlusselemente (302), die in zugeordnete Formschlusselemente (502) des Gehäuses (5) eingreifen und/oder
- die Nadeln (10, 20) Vorsprünge (101, 201) und Vertiefungen (102, 202) aufweisen, die wechselseitig ineinander greifen, wenn die Nadelspitzen (100, 200) axial zueinander verschoben sind, und die nicht ineinander greifen, wenn sich die Nadelspitzen (100, 200) axial auf gleichem Niveau befinden, so dass die Nadelspitzen (100, 200) durch die aufeinander liegenden Vorsprünge (101, 201) auseinander gedrückt werden.

9. Nadelsystem für eine Verbindungsvorrichtung zur lösbaren Verbindung von wenigstens zwei vorzugsweise plattenartigen Teilen, insbesondere gemäß Anspruch 1, mit wenigstens zwei Nadeln (10, 20), deren Spitzen (100, 200) als hakenförmige Widerlager ausgebildet sind,
**dadurch gekennzeichnet,**
**dass** wenigstens zwei der einander zugewandten Flächen der Nadeln (10, 20) eine von der axialen Verschiebeebene abweichenden Kontur aufweisen, insbesondere in Form von Vorsprüngen (101, 201) und Vertiefungen (102, 202),
o die wechselseitig ineinander greifend verschachtelt sind, wenn die Nadelspitzen (100, 200) axial zueinander verschoben sind, und
o die nicht oder nur teilweise ineinander greifen, wenn sich die Nadelspitzen (100, 200) axial auf gleichem Niveau befinden, so dass die Nadelspitzen (100, 200) durch die aufeinander liegenden Vorsprünge (101, 201) auseinander gedrückt werden, wodurch die Stützflächen (104, 204) der Nadelspitzen (100, 200) die zugeordnete Fläche eines der zu verbindenden Teile übergreift.

10. Nadelsystem nach Anspruch 9, **dadurch gekennzeichnet, dass** die Vorsprüngen (101, 201) und Vertiefungen (102, 202) oder dergleichen einstückig in die Nadeln (10, 20), insbesondere in den Bereich der Nadelspitzen (10, 20) integriert sind.

11. Nadelsystem nach Anspruch 9, **dadurch gekennzeichnet, dass** die Nadeln (10, 20) aus Kunststoff, insbesondere einem faserverstärkten Kunststoff, gefertigt sind oder dass die Nadeln (10, 20) aus einem metallischen Werkstoff gefertigt sind, z. B. in Form eines Gussteils oder eines Kaltfließpressteils.

12. Nadelsystem nach Anspruch 11, **dadurch gekennzeichnet, dass**
- die aus Kunststoff gefertigten Nadeln (10, 20) integraler Bestandteil des zugeordneten Träger (11, 21) sind oder
- die metallischen Nadeln (10, 20) basisseitig Formschlussbereiche zur stabilen Einbettung in einen Träger (11, 21) aus Kunststoff aufweisen oder
- die Nadeln (10, 20) und der Träger (11, 21) als einstückige metallische Gussteile gefertigt sind.

13. Nadelsystem nach wenigstens einem der Ansprüche 9 bis 12, **dadurch gekennzeichnet, dass**
- die Summe der Querschnitte aller Nadelspitzen (100, 200) in der Ebene ihrer Stützflächen (104, 204) annähern dem Querschnitt der Montagebohrungen in den zu verbindenden Teilen entspricht, vorzugsweise mehr als 90 % dieses Querschnitts oder
- die Summe der Querschnitte aller Nadelspitzen (100, 200) in der Ebene ihrer Stützflächen (104, 204) größer ist als der Querschnitt der Montagebohrungen in den zu verbindenden Teilen.

14. Nadelsystem nach Anspruch 13, **dadurch gekennzeichnet, dass**, wenn die Summe der Querschnitte aller Nadelspitzen (100, 200) in der Ebene ihrer Stützflächen (104, 204) größer ist als der Querschnitt der Montagebohrungen in den zu verbindenden Teilen, die Vorsprünge (101', 201') der Nadelspitzen (100a, 200a; 100b, 200b) durch eine entgegen der Rastrichtung der Stützflächen (104a, 204a; 104b, 204b) verlaufende geschwungene Kontur der Nadeln (10a, 20a; 10b, 20b) von den Nadelspitzen (100a, 200a; 100b, 200b) selbst gebildet werden, wobei die Vorsprünge (201') der kürzeren Nadeln (20a, 20b) in zugeordnete Freiräume (102') der längeren Nadeln (10a, 10b) eingreifen, während der Vorsprung (101') der längsten Nadel (10a, 10b) die Nadelspitzen (200a, 200b) der anderen Nadeln (20a, 20b) übergreift.

15. Nadelsystem nach wenigstens einem der Ansprüche 9 bis 14, **dadurch gekennzeichnet, dass**
- die einander zugewandten Flächen der Nadeln (10a, 20a) bzw. der Nadelspitzen (100a, 200a) im wesentlichen axial gerichtete, formschlüssig ineinander greifende Führungskonturen (106a, 206a; 106aa, 206aa) aufweisen, um eine definierte Positionierung der Nadelspitzen (100a, 200a) zu gewährleisten und/oder
- die Nadelspitzen (100a, 200a; 100b, 200b) biegeelastisch mit den Nadelschäften verbunden sind.

## Claims

1. Connecting device for connecting two preferably plate-like parts (T1, T2), in particular for releasably connecting two parts to be adhesively bonded,
- having a supporting face (301), connected directly or indirectly to the housing (5) of the connecting device, for supporting on one side against one of the parts to be connected,
- having supporting faces (104, 204) on at least two hook-like abutments for supporting against the other of the parts to be connected, wherein the supporting faces (104, 204) of the hook-like abutments form the free end of associated needles (10, 20),
- having a system for axially setting the supporting faces (104, 204) of the adjustable hook-like abutments and for the displacement thereof orthogonally to the axial setting direction, in order to act by way of the supporting faces (104, 204) of the hook-like abutments on the other of the parts to be connected, after the hook-like abutments (needle tips 100, 200) have reached through the overlapping openings in the parts to be connected, and
- having a drive element (4) for axially setting the needles (10, 20),
**characterized**
**in that** at least two of the needles (10, 20) that belong to a connecting device are connected on the base side to separate carriers (11, 21), of which at least one carrier (11, 12) is operatively connected to the drive element (4) such that the drive element (4) is suitable for adjusting the needles (10, 20) relative to one another in the axial direction,
**in that**, in a starting position of the needles prior to the bracing of the parts to be connected, the needle tips (100, 200) are moved axially with respect to one another, and in that in a braced position, the needle tips (100, 200) are located opposite one another such that the supporting faces (104, 204) thereof are located at the same axial level,
**in that** the needles (10, 20) have integrated elevations (101, 201) and depressions (102, 202) on their facing faces in the region of their tips (100, 200), wherein these elevations (101, 201) and depressions (102, 202) are nested in one another in a space-saving manner in the starting position of the needles (10, 20), and wherein the elevations (101, 201) are supported against one another in the bracing position of the needle tips (100, 200) such that the supporting faces (104, 204) are adjusted orthogonally to the axial setting direction of the needles (10, 20).

2. Device according to Claim 1, **characterized by**
∘ a first needle/carrier combination (1) that consists of a first, shorter needle (10) which is fixedly connected to a first carrier (11), and
∘ a second needle/carrier combination (2) that consists of a second, longer needle (20) which is fixedly connected to a second carrier (21),
o wherein the first carrier (11) has a cutout or a passage opening (111) for the second, longer needle (20), such that the carriers (11, 21) are arrangeable axially one behind the other and the needles (10, 20) are arrangeable next to one another.

3. Device according to Claim 2, **characterized in that** the carriers (11, 21) have guide openings (112, 212) which extend in an aligned manner and into which guide bodies (31) of a supporting/guide body combination (3) are pluggable for the purposes of rotation prevention, or the first carrier (11) is provided with an external thread (100) which can be brought into engagement with the internal thread (43) of the drive (4), and **in that** the second carrier (21) is pretensioned in the direction of the upstream first carrier (11) by means of a spring element.

4. Device according to Claims 1 and 2, **characterized in that**
- the first carrier (11) has a coupling element (12) which is pluggable into a coupling opening (211) in the second carrier (21) and, interacting with a stop face (211c) arranged in the region of the coupling opening (211), forms a limit for the axial displaceability of the needles (100, 200) such that the supporting faces (104, 204) of the needle tips (100, 200) are aligned with one another, or
- the first and the second carrier (11, 21) are arrangeable in a manner resting against one another, wherein the supporting faces (104, 204) of the needle tips (100, 200) are not aligned with one another.

5. Device according to at least one of the preceding claims, **characterized in that**, for the axial adjustability of the carriers (11, 12) and the needles (100, 200) connected thereto, the carriers (11, 21) have a screw thread (110, 210) which is operatively connected to an associated screw thread (43) of the drive element (4).

6. Device according to Claim 5, **characterized in that**
- the screw thread (43) of the drive element (4) is configured as internal thread portions that are arranged in sectors, and/or
- a cylindrical face (45) without a thread is positioned upstream of the screw thread (43) at the open end of the sleeve-like drive element (4), said cylindrical face (45) having at least a height which corresponds to the height of the first carrier.

7. Device according to at least one of the preceding claims, **characterized in that** a tool interface (41) for the engagement of a rotating tool is provided at the base (40) of the drive element (4).

8. Device according to at least one of the preceding claims, **characterized in that**
- a rotation prevention means is provided between the housing (5) and the supporting/guide body combination (3), in particular ensured by form-fitting elements (302) which are integrally formed thereon and engage in associated form-fitting elements (502) on the housing (5), and/or
- the needles (10, 20) have protrusions (101, 201) and depressions (102, 202) which engage alternately in one another when the needle tips (100, 200) are displaced axially with respect to one another and which do not engage in one another when the needle tips (100, 200) are located axially at the same level, such that the needle tips (100, 200) are pushed apart by the protrusions (101, 201) resting against one another.

9. Needle system for a connecting device for releasably connecting at least two preferably plate-like parts, in particular according to Claim 1, having at least two needles (10, 20), the tips of which (100, 200) are configured as hook-like abutments,
**characterized**
**in that** at least two of the facing faces of the needles (10, 20) have a contour that deviates from the axial displacement plane, in particular in the form of protrusions (101, 201) and depressions (102, 202),
∘ which nest with one another in a manner engaging alternately in one another when the needle tips (100, 200) have been displaced axially with respect to one another, and
∘ which do not engage in one another or only engage partially in one another when the needle tips (100, 200) are located axially at the same level, such that the needle tips (100, 200) are pushed apart by the protrusions (101, 201) resting against one another, with the result that the supporting faces (104, 204) of the needle tips (100, 200) engage over the associated face of one of the parts to be connected.

10. Needle system according to Claim 9, **characterized in that** the protrusions (101, 201) and depressions (102, 202) or the like are integrated integrally into the needles (10, 20), in particular in the region of the needle tips (10, 20).

11. Needle system according to Claim 9, **characterized in that** the needles (10, 20) are manufactured from plastics material, in particular a fibre reinforced plastics material, or **in that** the needles (10, 20) are manufactured from a metal material, for example in the form of a cast part or of a cold-extruded part.

12. Needle system according to Claim 11, **characterized in that**
- the needles (10, 20) manufactured from plastics material are an integral part of the associated carrier (11, 21), or
- the metal needles (10, 20) have form-fitting regions at their bases for stable embedding in a carrier (11, 21) made of plastics material, or
- the needles (10, 20) and the carrier (11, 21) are manufactured as one-piece metal cast parts.

13. Needle system according to at least one of Claims 9 to 12, **characterized in that**
- the sum of the cross sections of all the needle tips (100, 200) in the plane of their supporting faces (104, 204) corresponds approximately to the cross section of the mounting bores in the parts to be connected, preferably to more than 90% of this cross section, or
- the sum of the cross sections of all the needle tips (100, 200) in the plane of their supporting faces (104, 204) is greater than the cross section of the mounting bores in the parts to be connected.

14. Needle system according to Claim 13, **characterized in that**, when the sum of the cross sections of all the needle tips (100, 200) in the plane of their supporting faces (104, 204) is greater than the cross section of the mounting bores in the parts to be connected, the protrusions (101', 201') on the needle tips (100a, 200a; 100b, 200b) are formed by the needle tips (100a, 200a; 100b, 200b) themselves as a result of a curved contour of the needles (10a, 20a; 10b, 20b) that extends counter to the latching direction of the supporting faces (104a, 204a; 104b, 204b), wherein the protrusions (201') on the shorter needles (20a, 20b) engage in associated clearances (102') in the longer needles (10a, 10b), while the protrusion (101') on the longest needle (10a, 10b) engages over the needle tips (200a, 200b) of the other needles (20a, 20b).

15. Needle system according to at least one of Claims 9 to 14, **characterized in that**
- the facing faces of the needles (10a, 20a) or of the needle tips (100a, 200a) have substantially axially directed guide contours (106a, 206a; 106aa, 206aa) that engage in a form-fitting manner in one another, in order to ensure a defined position of the needle tips (100a, 200a), and/or
- the needle tips (100a, 200a; 100b, 200b) are connected to the needle shanks in a flexurally elastic manner.

## Revendications

1. Ensemble de liaison destiné à relier deux pièces (T1, T2) de préférence en forme de plaque, en particulier pour relier de manière libérable deux pièces à coller, et présentant
une surface de soutien (301) reliée directement ou indirectement au boîtier (5) de l'ensemble de liaison et qui s'appuie d'une part sur l'une des pièces à relier,
des surfaces de soutien (104, 204) sur au moins deux contre-appuis en forme de crochet, destinées à s'appuyer sur l'autre des pièces à relier, les surfaces de soutien (104, 204) des contre-appuis en forme de crochet formant l'extrémité libre d'aiguilles (10, 20) associées,
un système d'ajustement axial des surfaces de soutien (104, 204) des contre-appuis ajustables en forme de crochet et de déplacement perpendiculaire à la direction d'ajustement axial pour engager l'autre des pièces à relier par les surfaces de soutien (104, 204) des contre-appuis en forme de crochet, après les contre-appuis en forme de crochet (pointes 100, 200 des aiguilles) ont traversé des ouvertures superposées des pièces à relier et
un élément d'entraînement (4) qui assure l'ajustement axial des aiguilles (10, 20),
**caractérisé en ce que**
au moins deux des aiguilles (10, 20) faisant partie d'un ensemble de liaison sont reliées du côté de leur base à des supports séparés (11, 21) parmi lesquels au moins un support (11, 12) est relié fonctionnellement à l'élément d'entraînement (4) de telle sorte que l'élément d'entraînement (4) puisse ajuster les aiguilles (10, 20) l'une par rapport à l'autre dans la direction axiale,
**en ce que** dans une position initiale des aiguilles, avant le serrage des pièces à relier, les pointes (100, 200) des aiguilles sont déplacées axialement l'une vers l'autre et **en ce que** dans une position de serrage, les pointes (100, 200) des aiguilles sont situées l'une face à l'autre de telle sorte que leurs surfaces de soutien (104, 204) soient situées au même niveau axial,
**en ce que** les aiguilles (10, 20) présentent au niveau de leur pointe (100, 200) des reliefs (101, 201) et des creux (102, 202) intégrés relatifs à leurs surfaces tournées l'une vers l'autre, ces reliefs (101, 201) et ces creux (102, 202) étant emboîtés l'un dans l'autre de manière compacte dans la position initiale des aiguilles (10, 20) et les reliefs (101, 201) reposant l'un contre l'autre lorsque les pointes (100, 200) des aiguilles sont en position de serrage, de telle sorte que les surfaces de soutien (104, 204) soient ajustées orthogonalement par rapport à la direction d'ajustement axial des aiguilles (10, 20).

2. Ensemble selon la revendication 1, **caractérisé par**
une première combinaison (1) d'aiguille et de support constituée d'une première aiguille courte (10) reliée solidairement à un premier support (11) et
une deuxième combinaison (2) d'aiguille et de support constituée d'une deuxième aiguille (20) plus longue reliée solidairement à un deuxième support (21),
le premier support (11) présentant pour la deuxième aiguille (20) plus longue une découpe ou une perforation (111) de telle sorte que les supports (11, 21) puissent être disposés l'un à la suite de l'autre dans la direction axiale et les aiguilles (10, 20) l'une à côté de l'autre.

3. Ensemble selon la revendication 2, **caractérisé en ce que** les supports (11, 21) présentent des ouvertures de guidage (112, 212) qui sont alignées l'une sur l'autre et dans laquelle des corps de guidage (31) d'une combinaison (3) de soutien et de corps de guidage peuvent être enfoncés pour empêcher une rotation, ou **en ce que** le premier support (11) est doté d'un filetage extérieur (100) qui peut s'engager sur un taraudage (43) de l'entraînement (4) et **en ce que** le deuxième support (21) est précontraint en direction du premier support (11) pré-monté au moyen d'un élément élastique.

4. Ensemble selon les revendications 1 et 2, **caractérisé en ce que** le premier support (11) présente un élément d'accouplement (12) qui peut être enfiché dans une ouverture d'accouplement (211) du deuxième support (21) et qui, en coopération avec une surface de butée (211c) disposée au niveau de l'ouverture d'accouplement (211), forme une limite à la possibilité de coulissement axial des aiguilles (100, 200) de telle sorte que les surfaces de soutien (104, 204) des pointes (100, 200) des aiguilles soient alignées l'une sur l'autre, ou **en ce que** le premier et le deuxième support (11, 21) peuvent être disposés l'un contre l'autre, les surfaces de soutien (104, 204) des pointes (100, 200) des aiguilles n'étant alors pas alignées l'une sur l'autre.

5. Ensemble selon au moins l'une des revendications précédentes, **caractérisé en ce que** pour assurer la possibilité d'ajustement axial des supports (11, 21) et des aiguilles (100, 200) qui leur sont associées, les supports (11, 21) présentent un filetage hélicoïdal (110, 210) qui coopère avec un filetage hélicoïdal associé (43) de l'élément d'entraînement (4).

6. Ensemble selon la revendication 5, **caractérisé en ce que** le filetage hélicoïdal (43) de l'élément d'entraînement (4) est configuré comme parties de filetage intérieur disposées en secteurs et/ou **en ce qu'**une surface cylindrique (45) sans filet précède le filetage hélicoïdal (43) à l'extrémité ouverte de l'élément d'entraînement (4) en forme de douille et présente au moins une hauteur qui correspond à la hauteur du premier support.

7. Ensemble selon au moins l'une des revendications précédentes, **caractérisé en ce que** sur le fond (40) de l'élément d'entraînement (4), une interface d'outil (41) est prévue pour engager un outil rotatif.

8. Ensemble selon au moins l'une des revendications précédentes, **caractérisé en ce qu'**une protection contre la torsion est prévue entre le boîtier (5) et la combinaison (3) de soutien et de corps de guidage et est en particulier assurée par des éléments (302) de mise en correspondance géométrique qui y sont formés et qui engagent des éléments (502) en correspondance géométrique associés du boîtier (5) et/ou **en ce que** les aiguilles (10, 20) présentent des saillies (101, 201) et des creux (102, 202) qui s'engagent les uns dans les autres en alternance lorsque les pointes (100, 200) des aiguilles sont déplacées axialement l'une par rapport à l'autre et qui ne s'engagent pas les uns dans les autres lorsque les pointes (100, 200) des aiguilles sont situées axialement au même niveau, de telle sorte que les pointes (100, 200) des aiguilles soient repoussées l'une hors de l'autre par les saillies (101, 201) reposant l'une contre l'autre.

9. Système d'aiguille pour un ensemble de liaison destiné à relier de manière libérable au moins deux pièces de préférence en forme de plaque, en particulier selon la revendication 1, et présentant au moins deux aiguilles (10, 20) dont les pointes (100, 200) sont configurées comme contre-appuis en forme de crochet, **caractérisé en ce que**
au moins deux des surfaces tournées l'une vers l'autre des aiguilles (10, 20) présentent un contour qui diffère du plan axial de déplacement et qui présentent en particulier la forme de saillies (101, 201) et de creux (102, 202), qui s'emboîtent en alternance l'une dans l'autre lorsque les pointes (100, 200) des aiguilles sont déplacées axialement l'une vers l'autre et qui ne s'engagent pas ou ne s'engagent que partiellement l'une dans l'autre lorsque les pointes (100, 200) des aiguilles sont situées axialement au même niveau de telle sorte que les pointes (100, 200) des aiguilles sont repoussées l'une de l'autre par les saillies (101, 201) reposant l'une sur l'autre, grâce à quoi les surfaces de soutien (104, 204) des pointes (100, 200) des aiguilles chevauchent la surface associée de l'une des pièces à relier.

10. Système d'aiguille selon la revendication 9, **caractérisé en ce que** les saillies (101, 201) et les creux (102, 202) ou similaires sont intégrés d'un seul tenant dans les aiguilles (10, 20), en particulier au niveau des pointes (10, 20) des aiguilles.

11. Système d'aiguille selon la revendication 9, **caractérisé en ce que** les aiguilles (10, 20) sont réalisées en matière synthétique, en particulier en matière synthétique renforcée de fibres ou **en ce que** les aiguilles (10, 20) sont réalisées en un matériau métallique, par exemple sous la forme d'une pièce coulée ou d'une pièce de pressage à froid.

12. Système d'aiguille selon la revendication 11, **caractérisé en ce que** les aiguilles (10, 20) réalisées en matière synthétique font partie intégrante du support (11, 21) associé ou **en ce que** les aiguilles métalliques (10, 20) présentent du côté de leur base des parties en correspondance mécanique permettant une incorporation stable dans un support (11, 21) en matière synthétique ou
**en ce que** les aiguilles (10, 20) et le support (11, 21) sont réalisés sous la forme de pièces métalliques coulées d'un seul tenant.

13. Système d'aiguille selon au moins l'une des revendications 9 à 12, **caractérisé en ce que** la somme des sections transversales de toutes les pointes (100, 200) des aiguilles dans le plan de leur surface de soutien (104, 204) correspond sensiblement à la section transversale des alésages de montage dans les pièces à relier et représente de préférence plus de 90 % de cette section transversale ou **en ce que** la somme des sections transversales de toutes les pointes (100, 200) des aiguilles dans le plan de leur surface de soutien (104, 204) est supérieure à la section transversale des alésages de montage ménagés dans les pièces à relier.

14. Système d'aiguille selon la revendication 13, **caractérisé en ce que** lorsque la somme des sections transversales de toutes les pointes (100, 200) des aiguilles dans le plan de leur surface de soutien (104, 204) est supérieure à la section transversale des alésages de montage ménagés dans les pièces à relier, les saillies (101', 201') des pointes (100a, 200a; 100b, 200b) des aiguilles sont formées par les pointes (100a, 200a; 100b, 200b) des aiguilles proprement dites, par un contour courbé des aiguilles (10a, 20a; 10b, 20b) en opposition à la direction d'encliquetage des surfaces de soutien (104a, 204a; 104b, 204b), les saillies (201') des aiguilles plus courtes (20a, 20b) s'engageant dans des espaces libres (102') associés aux aiguilles plus longues (10a, 10b) tandis que la saillies (101') de l'aiguille la plus longue (10a, 10b) chevauchent les pointes (200a, 20b) des autres aiguilles (20a, 20b).

15. Système d'aiguille selon au moins l'une des revendications 9 à 14, **caractérisé en ce que** les surfaces tournées l'une vers l'autre des aiguilles (10a, 20a) ou des pointes (100a, 200a) des aiguilles présentent des contours de guidage (106a, 206a; 106aa, 206aa) orientés essentiellement axialement et s'engageant l'un dans l'autre en correspondance géométrique pour garantir un positionnement défini des pointes (100a, 200a) des aiguilles et/ou **en ce que** les pointes (100a, 200a; 100b, 200b) des aiguilles sont reliées aux tiges des aiguilles de manière élastique en flexion.
